Europäisches Patentamt

European Patent Office

Office européen des brevets

(19)

(11) Veröffentlichungsnummer: **0 343 329 B1**

(12)                     EUROPÄISCHE PATENTSCHRIFT

(45) Veröffentlichungstag der Patentschrift: **02.12.92**

(51) Int. Cl.⁵: **B23Q 16/10**

(21) Anmeldenummer: **89104458.8**

(22) Anmeldetag: **14.03.89**

(54) **Indexiervorrichtung.**

(30) Priorität: **26.05.88 DE 3817873**

(43) Veröffentlichungstag der Anmeldung:
**29.11.89 Patentblatt 89/48**

(45) Bekanntmachung des Hinweises auf die
Patenterteilung:
**02.12.92 Patentblatt 92/49**

(84) Benannte Vertragsstaaten:
**ES FR GB IT**

(56) Entgegenhaltungen:
**GB-A- 2 073 063**
**GB-A- 2 104 807**
**US-A- 4 307 584**
**US-A- 4 507 993**

(73) Patentinhaber: **Sauter Feinmechanik GmbH**
**Postfach 15 51**
**W-7430 Metzingen(DE)**

(72) Erfinder: **Thumm, Helmut, Dipl.-Ing. (FH)**
**Steinerweg 37**
**W-7430 Metzingen(DE)**
Erfinder: **Reusch, Walter,Dipl.-Ing. (FH)**
**Metzinger Strasse 51**
**W-7433 Dettingen/Erms(DE)**
Erfinder: **Schips, Günther**
**Schillerstrasse 26**
**W-7430 Metzingen(DE)**
Erfinder: **Sauter, Willy**
**Berggasse 91**
**W-7410 Reutlingen(DE)**

(74) Vertreter: **Patentanwälte Phys. H. Bartels**
**Dipl.-Ing. H. Fink Dr.-Ing M. Held Dipl.-Ing. M.**
**Bartels**
**Lange Strasse 51**
**W-7000 Stuttgart 1(DE)**

EP 0 343 329 B1

**Beschreibung**

Die Erfindung betrifft einen Werkzeugrevolver, der die Merkmale des Oberbegriffs des Anspruches 1 aufweist.

Bei bekannten Werkzeugrevolvern dieser Art (DE-A- 31 53 112) ist der drehbar auf der Antriebswelle angeordnete Revolverkopf dann, wenn das Verriegelungsteil sich in seiner Freigabestellung befindet, um einen bestimmten Winkel relativ zur Antriebswelle verdrehbar, weil der Antrieb des Revolverkopfes bei diesen Werkzeugrevolvern über Steuerelemente des Steuerkörpers erfolgt. Erst am Ende dieses Winkelbereiches ist eine formschlüssige Drehverbindung zwischen der Antriebswelle und dem Revolverkopf vorhanden. Kollisionen eines Werkzeuges mit einem Werkstück oder der Werkzeugmaschine während der Drehbewegung des Revolverkopfes führen deshalb zu stoßartigen Belastungen, denen stoßempfindliche Teile nicht mehr standhalten, wenn die Winkelgeschwindigkeit des Revolverkopfes und das in seiner Größe von der Winkelgeschwindigkeit abhängige Schwungmoment der sich drehenden Teile zu groß ist. Die von der erreichbaren Drehgeschwindigkeit des Revolverkopfes abhängige Schaltgeschwindigkeit ist deshalb bei diesen bekannten Werkzeugrevolvern relativ gering.

Da es erwünscht ist, die Schaltgeschwindigkeit zu erhöhen, um die Zeiten, in denen die Werkstückbearbeitung wegen einer Umschaltung des Werkzeugrevolvers unterbrochen ist, möglichst klein zu halten, liegt der Erfindung die Aufgabe zugrunde, einen Werkzeugrevolver zu schaffen, der hohe Schwungmomente und damit hohe Schaltgeschwindigkeiten zuläßt, ohne in einem Kollisionsfalle Schaden zu erleiden. Diese Aufgabe löst ein Werkzeugrevolver mit den Merkmalen des Anspruches 1.

Die starre Verbindung des Revolverkopfes mit seiner Antriebswelle verhindert, daß Steuerelemente Drehmomente vom Motor zum Revolverkopf und umgekehrt übertragen müssen. Da die zu übertragenden Drehmomente sehr hoch sein können, was vor allem für den Fall gilt, daß der Revolverkopf während einer Drehbewegung infolge eines äußeren Störeinflusses blockiert wird, werden durch die erfindungsgemäße Lösung die Steuerelemente erheblich entlastet, so daß die bei den bekannten Lösungen immer wieder aufgetretenen Gewaltbrüche mit Sicherheit vermieden werden können. Aber auch diejenigen Bauteile der erfindungsgemäßen Lösung, welche Drehmomente zwischen dem Motor und dem Revolverkopf übertragen müssen, sind vor Überlastung geschützt, weil gefährliche Drehmomentespitzen, wie sie bei Stößen oder dergleichen auftreten, von der elastischen Kupplungseinrichtung gedämpft werden. Dabei ist von besonderem Vorteil, daß die elastische Kupplungseinrichtung nicht nur die vom Antrieb her kommenden Belastungsstöße dämpft, sondern vor allem auch diejenigen, die vom Revolverkopf ausgehen, beispielsweise wenn dieser oder die von ihm getragenen Werkzeuge bei einem Drehvorgang auf ein Hindernis auflaufen. Um trotz des direkten Antriebs des Revolverkopfes von dessen Antriebswelle aus sicherzustellen, daß das Verriegelungsteil im erforderlichen Maße mitgedreht wird, ist die zwischen dem Revolverkopf und dem Verriegelungsteil wirksame Mitnahmevorrichtung vorgesehen. Da diese Mitnahmevorrichtung sich auf der dem Revolverkopf zugekehrten und damit auf der dem Steuerteil und den Steuerelementen abgekehrten Seite des Verriegelungsteils befindet, kann die dem Steuerteil zugekehrte Seite ausschließlich entsprechend den Erfordernissen für die Steuerung der axialen Verschiebung des Verriegelungskörpers gestaltet werden. Sie kann also beispielsweise mit einer oder mehreren Steuerkurven versehen sein, die ausschließlich dazu dienen, die axiale Verschiebung des Verriegelungsteils zu steuern.

Zwar sind drehelastische Kupplungen als Bauelemente bekannt (US-A-4,307,584). Der Einbau einer elastischen Kupplungseinrichtung in den Antriebsstrang des Revolverkopfes eines Werkzeugrevolvers wurde bisher aber nicht in Betracht gezogen.

Die elastische Kupplungseinrichtung ist vorteilhafterweise gemäß den Ansprüchen 2 und 3 ausgebildet, da eine derartige Ausbildung sehr raumsparend ausgeführt werden kann und außerdem störungs- und wartungsfrei ist.

Die Verbindung des Steuerkörpers mit der elastischen Kupplungseinrichtung ist vorzugsweise gemäß den Ansprüchen 4 bis 6 ausgebildet. Die dabei vorgesehenen, federbelasteten Bolzen und die sie aufnehmenden Vertiefungen gewährleisten in einfacher Weise zum einen die Übertragung des vom Motor erzeugten Drehmomentes auf die Antriebswelle des Revolverkopfes, solange dieser noch nicht vorindexiert ist, zum anderen die erforderliche Verdrehbarkeit des Steuerkörpers relativ zum Verriegelungsteil, wenn letzteres vom Revolverkopf festgehalten wird, sowie nach jeder Verdrehung die erneute Ausrichtung des Steuerkörpers auf die elastische Kupplungseinrichtung. Vor allem aber wirken die gefederten Bolzen als mechanische Bremse, welche auch einen Überlauf verhindert. Damit weist diese Lösung erhebliche Vorteile auf gegenüber den bekannten elektromechanischen Bremsen und Anschlagsystemen.

Bei einer bevorzugten Ausführungsform ist der nicht unmittelbar mit der Antriebswelle des Revolverkopfes verbundene Teil der elastischen Kupplungseinrichtung mit den für den Eingriff des Indexierbolzens erforderlichen Vertiefungen versehen.

Dies ergibt zum einen den Vorteil, daß die beim Einfallen des Indexierbolzens auftretenden Massenkräfte federnd von der elastischen Kupplungseinrichtung aufgenommen und damit stark gedämpft werden. Zum anderen bietet es sich an, die elastische Kupplungseinrichtung neben der Trennwand anzuordnen, welche das Gehäuse an dem dem Revolverkopf abgekehrten Ende verschließt. Der Antrieb für den Indexierbolzen, bei dem es sich in der Regel um einen Elektromagneten handelt, kann dann zusammen mit den übrigen elektrischen Komponenten gemäß den Ansprüchen 8 und 9 in einem vom Inneren des Gehäuses vollständig getrennten Raum angeordnet werden, wodurch sich Störeinflüsse völlig ausschließen lassen.

Die Mitnahmevorrichtung, über welche der Revolverkopf das Verriegelungsteil antreibt, ist vorzugsweise gemäß den Ansprüchen 10 und 11 ausgebildet. Mitnahmebolzen dieser Art verhindern in einfacher Weise Beschädigungen oder einen Bruch von Teilen des Werkzeugrevolvers bei einer Kollision oder Überlastung, wenn diese auftreten, während sich das Verriegelungsteil in seiner Freigabestellung befindet.

Sind für die Steuerung der Axialverschiebung des Verriegelungsteils Rollen vorgesehen, welche auf je einer radialen Achse, beispielsweise des Verriegelungskörpers, drehbar gelagert sind, dann ist nur eine einzige Kurvenbahn erforderlich, die im Falle einer Zuordnung der Rollen zum Verriegelungsteil an der diesem zugekehrten Stirnfläche des Steuerkörpers vorgesehen sein kann. Statt der auf je einer Achse gelagerten Rollen können aber auch Wälzkörper vorgesehen sein, die mit Hilfe eines Käfigs positioniert werden. Bei Verwendung derartiger Wälzkörper ist es in der Regel vorteilhaft, sowohl den Steuerkörper als auch das Verriegelungsteil mit je einer Kurvenbahn zu versehen. In beiden Fällen ist es vorteilhaft, die Kurvenbahn oder die Kurvenbahnen so auszubilden, daß eine Umkehrung der Drehrichtung des Steuerkörpers nicht notwendig ist, um nach einer Drehung des Revolverkopfes in eine neue Position das Verriegelungsteil wieder in die Verriegelungsposition zu bringen. Hierzu ist es nur erforderlich, die Kurvenbahn oder Kurvenbahnen so auszubilden, daß auch bei einer Fortsetzung der Drehbewegung des Steuerkörpers in der gleichen Richtung die Rollen der Wälzkörper auf Abschnitte der Kurvenbahn oder Kurvenbahnen gelangen, welche den axialen Abstand zwischen Steuerkörper und Verriegelungsteil so weit vergrößern, daß das Verriegelungsteil in seine Verriegelungsposition gelangt. Durch das Vermeiden eines Reversierens läßt sich die Zeit verkürzen, die notwendig ist, um den Revolverkopf in eine neue Winkellage zu bringen, wozu beiträgt, daß die Drehrichtung so gewählt werden kann, daß die neue Position mit dem kleinstmöglichen Drehwinkel erreicht wird.

Um auch dann, wenn der Werkzeugrevolver eine große Zahl von wählbaren Stellungen seines Revolverkopfes hat und/oder eine hohe Schaltgeschwindigkeit erforderlich ist, wie dies insbesondere bei kleinen Werkzeugrevolvern angestrebt wird, zuverlässig die nach jeder Änderung der Drehstellung des Revolverkopfes und vor dem anschließenden Arbeitsvorgang erforderliche Verriegelungskontrolle ausführen zu können, weist eine bevorzugte Ausführungsform einen Schaltnocken gemäß Anspruch 17 auf, der mit Hilfe des ihm zugeordneten Näherungsschalters unabhängig von der Winkelgeschwindigkeit, mit der die ihn tragende Welle gedreht wird und unabhängig von der Größe des Drehwinkels am Ende des die Verriegelung bewirkenden Reversiervorganges ein Kontrollsignal erzeugt.

Sofern die Dämpfung, welche sich mit der elastischen Kupplungseinrichtung erreichen läßt auch nicht ausreichend ist, läßt sich die Dämpfung mit einem geringen zusätzlichen Aufwand noch deutlich durch eine zweite elastische Kupplungseinrichtung gemäß Anspruch 19 verbessern. Vor allem dann, wenn zwischen der Motorwelle und der Antriebswelle des Revolverkopfes ein Getriebe vorhanden ist, wie dies in der Regel der Fall ist, läßt sich die zweite elastische Kupplungseinrichtung raum- und kostensparend gemäß Anspruch 19 in dieses Getriebe integrieren.

Sofern der mit einer Mitnahmevorrichtung gemäß den Ansprüchen 10 und 11 erreichbare Kollisionsschutz nicht ausreichend ist, kann man die axiale Verschiebbarkeit des Verriegelungsteils und des Steuerkörpers sowie die axiale Zusammendrückbarkeit der beide belastenden Druckfeder so wählen, daß bei einer gefährlichen Kollision der Verriegelungsteil und der Steuerkörper axial so weit vom Revolverkopf weggeschoben werden, daß die Verzahnung des Verriegelungsteils außer Eingriff mit dem mit dem Gehäuse verbundenen Zahnkranz kommt und dadurch der Revolverkopf sich zum Abbau der auf ihn einwirkenden Kollisionskraft relativ zum Gehäuse verdrehen kann. Sofern dafür Vorsorge getragen wird, daß dabei die Verzahnung des Verriegelungsteils in Eingriff mit dem Zahnkranz des Revolverkopfes bleibt, braucht nach einem derartigen Kollisionsfall der Werkzeugrevolver nicht demontiert zu werden, um den Verriegelungsteil wieder auf den Revolverkopf auszurichten. Der Revolverkopf braucht nur mit Hilfe des Antriebs wieder in die richtige Position gefahren zu werden.

Im folgenden ist die Erfindung an Hand von zwei in der Zeichnung dargestellten Ausführungsbeispielen im einzelnen erläutert.
Es zeigen

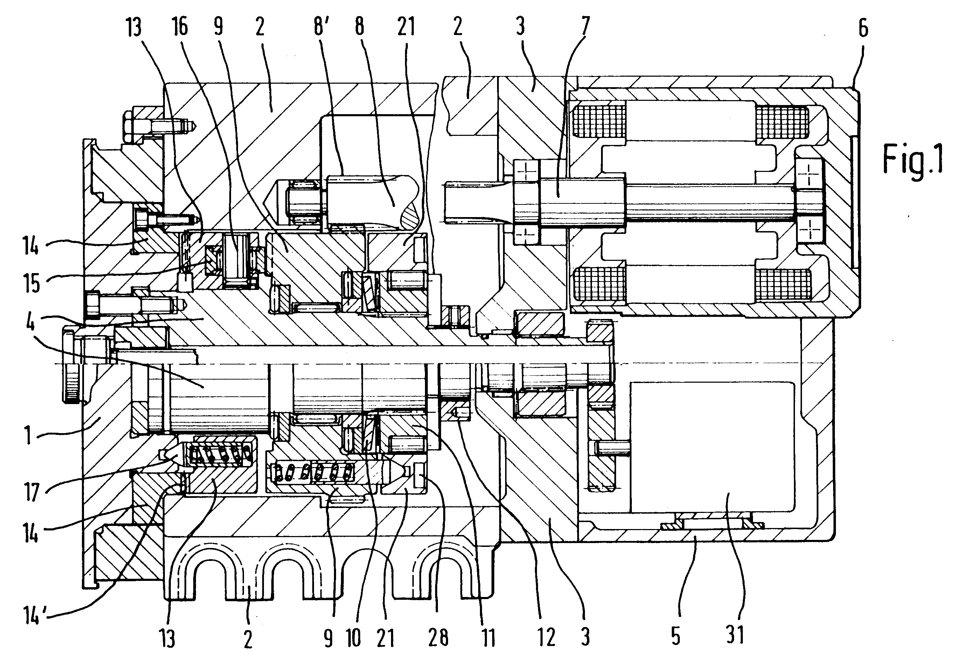

Fig. 1    einen Längsschnitt eines ersten Ausführungsbeispiels,

Fig. 2 einen unvollständig dargestellten Schnitt längs einer zur Längsachse des ersten Ausführungsbeispiels konzentrischen Zylinderfläche durch den Zylinderkopf, das Verriegelungsteil, den Steuerkörper und die elastische Kupplungseinrichtung in der Freigabestellung des Verriegelungsteils,

Fig. 3 einen Schnitt entsprechend Fig. 2 in der Verriegelungsstellung des Verriegelungsteils,

Fig. 4 einen unvollständig dargestellten Längsschnitt durch die elastische Kupplungseinrichtung und die Trennwand sowie eine Seitenansicht des Indexierbolzens und seines Antriebs,

Fig. 5 einen Querschnitt der elastischen Kupplungseinrichtung und deren Bohrungen für den Indexierbolzen,

Fig. 6 einen vergrößert dargestellten Längsschnitt durch einen in Fig. 1 nicht sichtbaren Teil des ersten Ausführungsbeispiels,

Fig. 7 einen Schnitt nach der Linie VII - VII der Fig. 6,

Fig. 8 einen Schnitt entsprechend Fig. 3 eines zweiten Ausführungsbeispiels,

Fig. 9 einen Schnitt entsprechend Fig. 3 des zweiten Ausführungsbeispiels.

Ein Werkzeugrevolver weist einen Revolverkopf 1 auf, der über das eine Ende eines Gehäuses 2 übersteht, relativ zu dem er in unterschiedliche, genau definierte Winkelstellungen drehbar ist. Am Revolverkopf 1 sind in bekannter Weise mehrere Werkzeughalter befestigbar. Das Gehäuse 2, das an einer nicht dargestellten Werkzeugmaschine festlegbar ist, ist an dem Revolverkopf 1 abgekehrten Ende mittels einer Trennwand 3 verschlossen, in welcher das eine Ende einer konzentrisch zur Drehachse des Revolverkopfes 1 angeordneten, hohlen Antriebswelle 4 drehbar gelagert ist, mit deren anderem Ende der Revolverkopf 1 fest verschraubt ist. An der dem Gehäuse 2 abgekehrten Seite der Trennwand 3 liegt dicht eine Abdeckhaube 5 an, die zusammen mit der Trennwand 3 einen Raum dicht verschließt, in dem sämtliche elektrischen Bauteile des Werkzeugrevolver angeordnet sind. Zu diesen Bauteilen gehört ein Asynchronmotor 6. Die Motorwelle 7, die parallel zur Antriebswelle 4 liegt, durchdringt die Trennwand 3, in der sie drehbar gelagert ist, und steht mit ihrem in den Innenraum des Gehäuses 2 ragenden Ende in Getriebeverbindung mit einem Untersetzungsgetriebe, dessen ebenfalls parallel zur Antriebswelle 4 liegende Abtriebswelle 8 im Bereich ihres freien Endes im Gehäuse 2 drehbar gelagert ist und neben diesem Endabschnitt einen als Ritzel 8′ ausgebildeten Abschnitt hat.

Das Ritzel 8′ kämmt mit einer Außenverzahnung eines drehbar und axial verschiebbar auf der Antriebswelle 4 gelagerten Steuerkörpers 9, der auf seiner der Trennwand 3 zugekehrten, also dem Revolverkopf 1 abgekehrten Stirnseite über ein Lager auf wenigstens einer Tellerfeder 10 abgestützt ist, welche auf die Antriebswelle 4 aufgeschoben ist.

Die Tellerfeder 10 ist andererseits auf einem Innenring 11 einer elastischen Kupplung abgestützt. Dieser Innenring 11 ist mittels einer Verzahnung drehfest mit der Antriebswelle 4 verbunden und auf der der Tellerfeder 10 abgekehrten Stirnseite unter Zwischenlage einer Ringscheibe auf einem auf die Antriebswelle 4 aufgeschraubten Stützring 12 abgestützt. Dieser Stützring 12 liegt unmittelbar neben der Trennwand 3.

Zwischen dem Steuerkörper 9 und dem in das Gehäuse 2 hineinragenden, im Durchmesser verkleinerten Endabschnitt des Revolverkopfes 1 ist auf der Antriebswelle 4 drehbar und axial verschiebbar ein ringförmiges Verriegelungsteil 13 angeordnet, dessen dem Revolverkopf 1 zugewandte Seite mit einer radial verlaufende Zähne aufweisenden Verzahnung 13′ versehen ist. Eine korrespondierend ausgebildete Verzahnung 1′ ist an der dem Verriegelungsteil 13 zugewandten Stirnfläche des Revolverkopfes 1 vorgesehen. Eine wie die Verzahnung 1′ ausgebildete Verzahnung 14′ ist an der dem Verriegelungsteil 13 zugewandten Stirnfläche eines Zahnringes 14 vorgesehen, der fest mit dem Gehäuse 2 verbunden ist und in den der im Durchmesser verringerte Endabschnitt des Revolverkopfes 1 eingreift, wobei dessen dem Verriegelungsteil 13 zugewandte Stirnfläche mit der entsprechenden Stirnfläche des Zahnringes 14 fluchtet. Die beiden Verzahnungen 1′ und 14′ werden gemeinsam geschliffen, da sie zusammen mit der Verzahnung 13′ des Verriegelungsteiles 13 dazu dienen, den Revolverkopf 1 mit hoher Präzision in den auswählbaren Winkelstellungen zu positionieren, wobei die Tellerfeder 10 die Kraft erzeugt, mit welcher in der Verriegelungsstellung des Verriegelungsteils 13 dessen Verzahnung 13′ in die Verzahnungen 1′ und 14′ hineingedrückt wird.

Für die Steuerung der axialen Verschiebung des Verriegelungsteiles 13 sind Rollen 15 vorgesehen, welche auf gleichmäßig über den Umfang des Verriegelungsteils 13 verteilt angeordneten, radial verlaufenden Zapfen 16 im Inneren des Verriegelungsteiles 13 drehbar gelagert sind und in gleichem Maße über die dem Steuerkörper 9 zugekehrte Stirnfläche des Verriegelungsteils 13 überstehen.

In den Zwischenräumen zwischen den Zapfen 16 sind von der dem Revolverkopf 1 zugekehrten Stirnseite her eindringende Sacklochbohrungen im Verriegelungsteil 13 vorgesehen, in denen je ein mittels einer vorgespannten Feder belasteter Mitnahmebolzen 17 längsverschiebbar gelagert ist. Der über das Verriegelungsteil 13 überstehende Endabschnitt dieser Mitnahmebolzen 17 ist kegelförmig ausgebildet, wobei der Kegelwinkel außerhalb des Selbsthemmungsbereiches liegt. Auf jeden der Mitnahmebolzen 17 ist eine in den Revolverkopf 1 eindringende konische Bohrung 18 ausgerichtet, deren Kegelwinkel an denjenigen des Bolzenendes angepaßt ist. Diese konischen Bohrungen 18 liegen in je einer Vertiefung 19. Die Mitnahmebolzen 17 und die konischen Bohrungen 18 bilden eine Mitnahmevorrichtung, von der bei einer Drehbewegung des Revolverkopfes 1 das Verriegelungsteil 13 mitgenommen wird. Da die Mitnahmebolzen 17 unvollständig aus der zugeordneten konischen Bohrung 18 herausgedrückt werden, wenn das zu übertragende Drehmoment eine obere Grenze überschreitet, können durch diese kraftschlüssige Mitnahmevorrichtung Beschädigungen oder ein Bruch im Falle einer Kollision oder einer Überlastung vermieden werden. Sind in einem solchen Falle die Mitnahmebolzen 17 aus den konischen Bohrungen 18 herausgedrängt worden, kehren sie anschließend selbsttätig wieder in ihre Ausgangslage zurück. Wurden sie jedoch vollständig herausgedrängt, brauchen anschließend die konischen Bohrungen 18 nur wieder auf die Mitnahmebolzen 17 ausgerichtet zu werden, weil der Hub der Mitnahmebolzen 17 auf einen Wert begrenzt ist, der es ausschließt, daß die Mitnahmebolzen 17 aus der ihnen zugeordneten Vertiefung heraustreten können.

Sofern man das Maß, um das die axial wirksame Länge der Tellerfeder 10 durch eine Druckbelastung reduziert werden kann, so groß wählt, daß im Falle einer Kollision die Verzahnung 13′ des Verriegelungsteils 13 aus der Verzahnung 1′ oder 14′ ausrasten kann, sind die Mitnahmebolzen 17 und die Bohrungen 18 zum Kollisionsschutz nicht erforderlich. Sie können aber verhindern, daß sich im Kollisionsfall der Revolverkopf 1 so weit gegenüber dem Verriegelungsteil 13 verdreht, daß diese Teile nicht mehr ohne weiteres wieder in ihre Ausgangswinkellage zurückgebracht werden können.

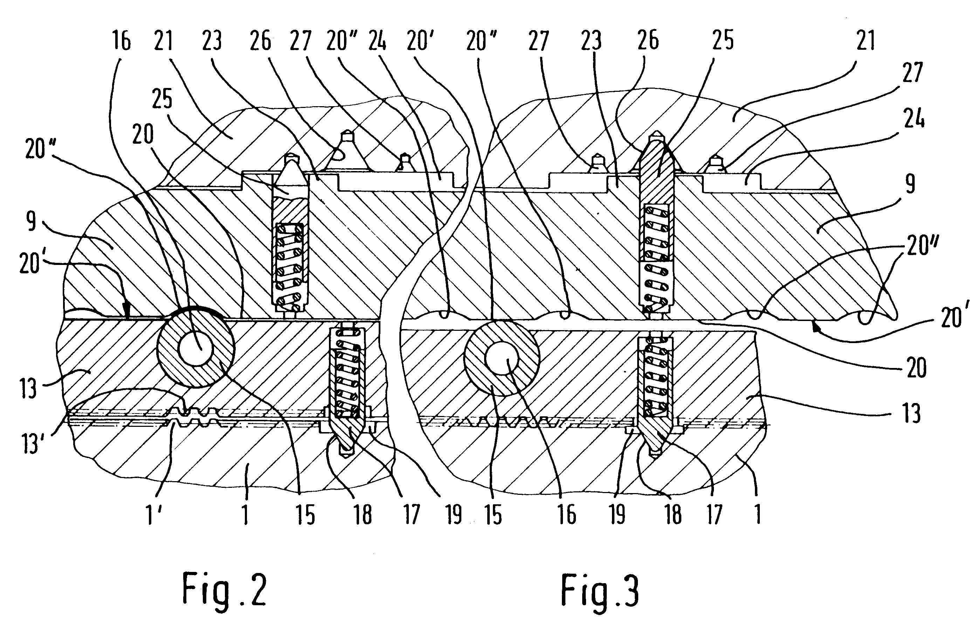

Auf der dem Verriegelungsteil 13 zugewandten Stirnseite weist, wie die Fig. 2 und 3 zeigen, der Steuerkörper 9 eine Kurvenbahn auf, welche sich über den gesamten Umfang der Stirnseite erstreckt und als Laufbahn für die Rollen 15 dient. Die Kurvenbahn besteht aus in einer Radialebene liegenden, in Umfangsrichtung im Wechsel aufeinander folgenden planen Abschnitten 20 und 20′ sowie je einem zwischen zwei benachbarten planen Abschnitten liegenden vertieften Abschnitt 20″. Letztere haben eine an die Krümmung der Außenmantelfläche der Rollen 15 angepaßte Krümmung. Liegen die Rollen 15 auf einem der planen Abschnitte 20′ auf, dann befindet sich das Verriegelungsteil 13 in seiner Verriegelungsstellung, in welcher die Verzahnung 13′ vollständig spielfrei in Eingriff ist mit den Verzahnungen 1′ und 14′, wie dies Fig. 3 zeigt. Greifen hingegen die Rollen 15 vollständig in die vertieften Abschnitte 20″ ein, wie dies Fig. 2 zeigt, dann befindet sich das Verriegelungsteil 13 in seiner Freigabestellung, in welcher seine Verzahnung 13′ die Verzahnungen 1′ und 14′ vollständig freigibt. Da an beide Seiten jedes vertieften Abschnittes 20″ der Kurvenbahn sich je einer der planen Abschnitte 20 bzw. 20′ anschließt, kann wahlweise die Drehung des Revolverkopfes 1 in eine neue Position in der einen oder anderen Drehrichtung erfolgen. Man könnte bei einer entsprechenden Ausbildung des Werkzeugrevolvers den Steuerkörper 9 in der gleichen oder der entgegengesetzten Richtung weiterdrehen, um das Verriegelungsteil 13 nach dem Erreichen der neuen Position in seine Verriegelungsstellung zu bringen.

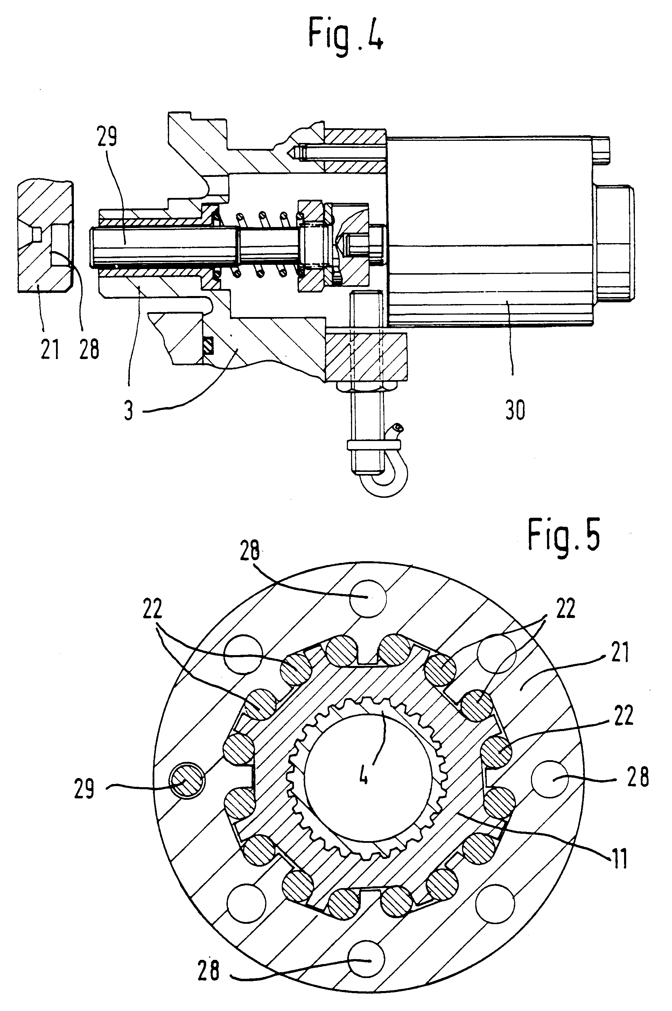

Den Innenring 11 der elastischen Kupplungseinrichtung umgibt konzentrisch ein Außenring 21. Wie Fig. 5 zeigt, ist der Außenring 21 mit einer Innenverzahnung und der Innenring mit einer entsprechenden Außenverzahnung versehen, wobei die Lücken zwischen zwei benachbarten Zähnen in beiden Fällen so ausgebildet sind, daß der in die Lücke eingreifende Zahn die Lücke in zwei zumindest im wesentlichen zylindrische Räume unterteilt, in denen je ein stabförmiges, den Raum spielfrei ausfüllendes Dämpfungselement 22 aus einem gummielastischen Material liegt. Diese Dämpfungselemente 22 lassen wie bei einer elastischen Kupplung eine gewisse Verdrehung des Außenringes 21 relativ zum Innenring 11 in beiden Drehrichtungen zu. Daher kann diese elastische Kupplungseinrichtung stoßartige Belastungen sowohl in Richtung vom Asynchronmotor 6 zum Revolverkopf 1 als auch in entgegengesetzter Richtung dämpfen. Dies ist auch im Hinblick darauf vorteilhaft, daß bei der Vorindexierung relativ große Massen abrupt zum Stillstand gebracht werden.

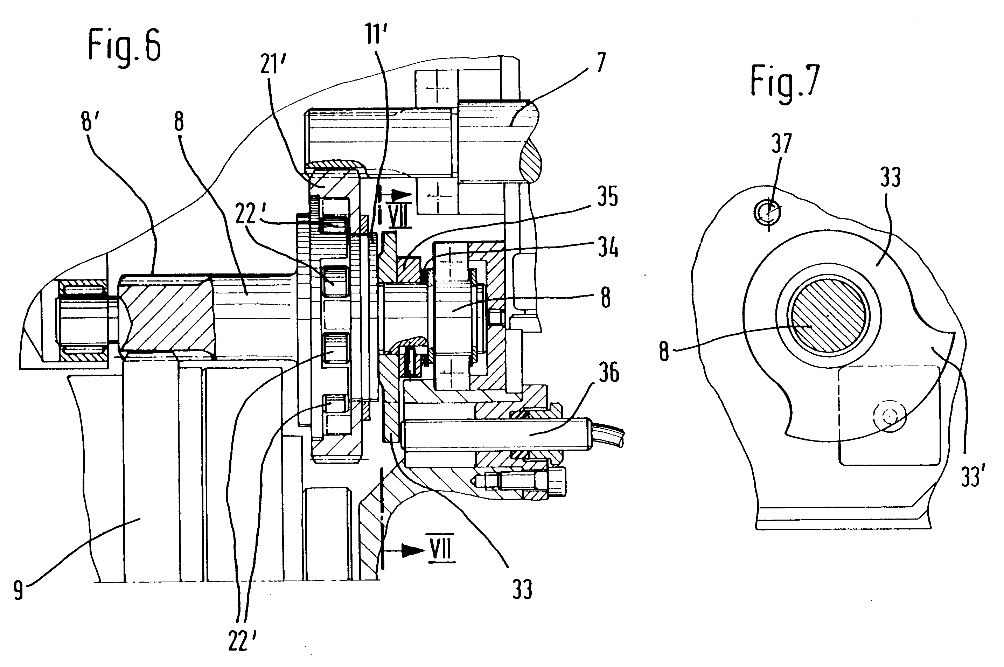

Eine entsprechend ausgebildete, zusätzliche elastische Kupplungseinrichtung verbindet die Motorwelle 7 mit der Abtriebswelle 8. Den einen Teil dieser Kupplungseinrichtung bildet, wie Fig. 6 zeigt, ein Außenring 21′, dessen Außenverzahnung mit einem an der Motorwelle 7 vorgesehenen Ritzel kämmt. Innen weist der Außenring 21′ eine Verzahnung auf, die wie die Innenverzahnung des Außenringes 21 ausgebildet ist. Den anderen Teil der Kupplungseinrichtung bildet ein fest auf der Abtriebswelle sitzender Innenring 11′ auf dem drehbar, aber axial unverschiebbar der Außenring , 21′ gelagert ist. Letzterer ist mit einer Außenverzahnung wie derjenigen des Innenringes 21 versehen. Zwischen den ineinandergreifenden Zähnen beider Teile sind walzenförmige Dämpfungselemente 22' angeordnet, über welche die Zähne spielfrei aufeinander abgestützt sind.

Wie die Fig. 2 und 3 zeigen, weist der Steuerkörper 9 an seiner auf den Außenring 21 ausgerichteten Stirnseite axial vorspringende Klauen 23 auf, die in je eine Nut 24 des Außenringes 21 eingreifen. Sowohl die Klauen 23 als auch die Nuten 24 haben in Radialebenen liegende Flanken, so daß eine formschlüssige Kupplung vorhanden ist, wenn die Klauen 23 an der einen oder anderen Flanke der zugeordneten Nut 24 anliegen. Wie die Fig. 2 und 3 zeigen, ist die in Umfangsrichtung gemessene Breite der Nuten 24 größer als die entsprechende Breite der Klauen 23, und zwar um ein solches Maß, daß, ausgehend von einer Ausrichtung der Klauen 23 auf die Mitte der zugeordneten Nut 24, also einer Position, in welcher die Rollen 15 in der Mitte eines der planen Abschnitte 20' stehen, die Klaue 23 relativ zur Nut 24 in der einen oder anderen Richtung so weit verschoben werden kann, daß die Rollen 15 in vollständigen Eingriff mit je einem der vertieften Abschnitte 20'' kommen. In dieser Stellung liegt die Klaue 23 an der einen Flanke der Nut 24 an.

Als Ersatz für eine mechanische Bremse oder einen sonstigen Anschlag sind mehrere Zentrierbolzen 25 vorgesehen, die in je einer zur Antriebswelle 4 parallelen, von der Stirnfläche jeder Klaue 23 aus in den Steuerkörper 9 eindringenden Bohrung längsverschiebbar gelagert sind, wobei je eine Feder die Zentrierbolzen 25 gegen den Außenring 21 belastet. Der über die Klaue 23 überstehende Endabschnitt der Zentrierbolzen 25 ist kegelförmig ausgebildet, wobei der Kegelwinkel außerhalb des Selbsthemmungsbereiches liegt. Ferner ist in der Mitte jeder der Nuten 24 eine konische Bohrung 26 vorgesehen, deren Konuswinkel an den Kegelwinkel des zugeordneten Zentrierbolzens 25 angepaßt ist, welcher in die konische Bohrung 26 eingreift, wenn die Klaue 23 auf die Mitte der Nut 24 ausgerichtet ist. Je eine kürzere konische Bohrung 27 ist im Grund jeder Nut für den Eingriff des zugeordneten Zentrierbolzenz 25 in den beiden Endstellungen vorgesehen, in denen die Klaue 23 an der einen oder anderen Flanke der Nur 24 anliegt. Die Zentrierbolzen 25 ersetzen nicht nur einen Anschlag oder eine elektromagnetische Bremse. Sie verhindern auch bei einer Relativbewegung zwischen dem Steuerkörper 9 und dem Außenring 21 einen Überlauf über die Mittelstellung hinaus, da die Zentrierbolzen 25 und die konischen Bohrungen 26 dank ihrer kegeligen Form ausrichtend wirken.

Auf der dem Steuerkörper 9 abgekehrten Stirnseite ist der Außenring 21 mit Sacklochbohrungen 28 für den Eingriff eines Indexierstiftes 29 versehen, der parallel zur Antriebswelle 4 längsverschiebbar die Trennwand 3 durchdringt. Sein elektromagnetischer Antrieb 30 ist innerhalb der Abdeckhaube 5 angeordnet und daher vor äußeren Einflüssen geschützt. Ferner ist innerhalb der Abdeckhaube 25 ein Drehstellungsgeber 31 angeordnet, der über Zahnräder in Getriebeverbindung mit der Antriebswelle 4 steht und die die Winkelstellung des Revolverkopfes 1 kennzeichnenden Signale erzeugt.

Soll die Winkelstellung des Revolverkopfes 1 verändert werden, dann wird der Asynchronmotor 6 in derjenigen Drehrichtung eingeschaltet, in welcher auf dem kürzesten Wege der Revolverkopf 1 seine neue Winkelposition erreicht. Da zunächst das Verriegelungsteil 13 sich noch in seiner Verriegelungsstellung befindet, hat das Einschalten des Asynchronmotors 6 nur eine Drehbewegung des Steuerkörpers 9 zur Folge. Die Antriebswelle 4 steht zunächst noch still. Infolge der Drehbewegung des Steuerkörpers 9 gelangen die Rollen 15 von der Mitte eines der planen Abschnitte 20' zur Mitte eines der vertieften Abschnitte 20'', wodurch das Verriegelungsteil in seine Freigabestellung verschoben wird. Die anfängliche Drehbewegung des Steuerkörpers 9 hat aber auch zur Folge, daß die Zentrierbolzen 25 aus der zugeordneten konischen Bohrung 26 austreten und in eine der konischen Bohrungen 27 einrasten, wenn die Klauen 23 in Anlage an die eine Flanke der Nut 24 gekommen sind. Dies ist der Fall, wenn die Rollen 15 die Mitte des vertieften Abschnittes 20'' erreicht haben. Da die Drehbewegung des Steuerkörpers 9 fortgesetzt wird, wird nun die Antriebswelle 4 und zusammen mit ihr der Revolverkopf 1 gedreht. Dabei nehmen die Mitnahmebolzen 17 das Verriegelungsteil 13 mit. Sobald die neue Winkelposition des Revolverkopfes 1 erreicht ist, wird aufgrund eines entsprechenden Signals des Drehstellungsgebers 31 der elektromagnetische Antrieb 30 aktiviert und der Indexierstift 29 in Eingriff mit der dieser Winkelposition zugeordneten Sacklochbohrung 28 gebracht. Hierdurch werden die Antriebswelle 4 und damit auch der Revolverkopf 1 blockiert. Gleichzeitig wird der Asynchronmotor 6 abgeschaltet. Durch erneutes Einschalten des Asynchronmotors 6 mit umgekehrter Drehrichtung wird der Steuerkörper 9 in die Ausgangsstellung zurückgedreht, in welcher die Zentrierbolzen 25 in die konischen Bohrungen 26 eingreifen. Dabei wird das Verriegelungsteil 13 in die Verriegelungsstellung geschoben. Ist diese erreicht, wird der Asynchronmotor 6 abgeschaltet.

Zur Erzeugung eines Verriegelungskontrollsignals, das nur dann generiert wird, wenn im Reversierbetrieb der Steuerkörper 9 in seine Verriegelungsstellung zurückgekehrt ist, ist auf der Abtriebswelle 8 drehbar ein Schaltnocken 33 angeordnet, den eine Feder 34 unter Zwischenlage eines Ringes 35 an die eine Stirnfläche des Innenringes 11' andrückt. Wie Fig. 7 zeigt, hat der Schaltnocken 33 als schaltender Teil einen radialen Vorsprung 33', der sich über einen Winkel von etwa 90° erstreckt. Parallel zur Abtriebswelle 8 ist ein Näherungsschalter 36 ortsfest in einem Durchbruch der Trennwand 3 so angeordnet, daß sich der Vorsprung 33' in geringem Abstand an der durch seine Stirnfläche gebildeten Sensorfläche vorbeibewegen kann. Um 180° versetzt zum Näherungsschalter 36 ist. ein in die Bewegungsbacken des Vorsprunges 33' ragender Anschlagbolzen 37 vorgesehen.

Wenn sich der Revolverkopf 1 in einer seiner auswählbaren Winkelstellungen befindet, ist die Sensorfläche auf die Mitte des Vorsprunges 33' ausgerichtet, wie dies Fig. 7 zeigt. Auch wenn der Revolverkopf 1 nur um den kleinsten Winkel in die eine oder andere Richtung gedreht werden muß, führt die Motorwelle wegen des Untersetzungsgetriebes eine Drehung von mehr als 180° aus. Wegen des Reibschlusses zwischen dem Schaltnocken 33 und dem Innenring 11' wird erster dabei stehts soweit mitgenommen, bis er am Anschlagbolzen 37 anschlägt. Während der für die Verriegelung erforderlichen Reversierung wird der Schaltnocken 33 wieder in seine Ausgangsstellung mitgenommen. Dabei kommt der Vorsprung 33' in den Ansprechbereich des Näherungsschalters 36, so daß dieser ein Signal erzeugt, das bestätigt, daß der Revolverkopf 1 wieder verriegelt ist. Auch bei sehr kleinen Verdrehwinkeln des Revolverkopfes, wie sie bei sechzehn und mehr Stellungen auftreten können, und bei sehr höhen Verstellgeschwindigkeiten arbeitet diese Verriegelungskontrolle zuverlässig.

Sofern auf die Klauen 23 verzichtet würde und die konischen Bohrungen 27 so ausgebildet würden, daß die in sie eingreifenden Zentrierbolzen 25 das für die Verdrehung des Revolverkopfes 1 erforderliche Drehmoment übertragen können, ohne aus den konischen Bohrungen 27 ausgehoben zu werden, wäre es auch möglich, das Verriegelungsteil 13 ohne ein Reversieren des Asynchronmotors 6 wieder in seine Verriegelungsstellung zu bringen.

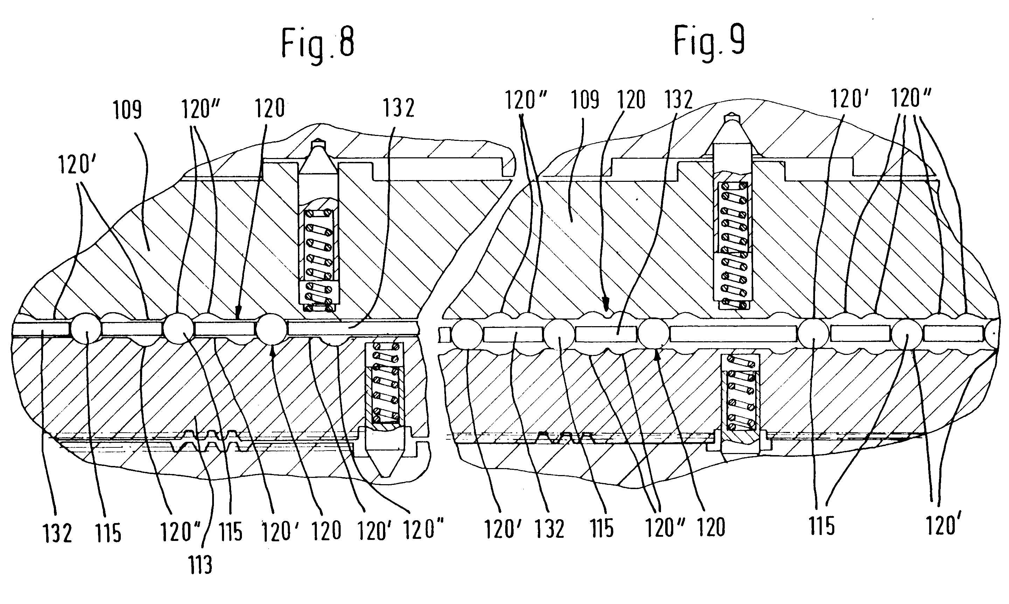

Das in den Fig. 8 und 9 dargestellte, zweite Ausführungsbeispiel unterscheidet sich vom ersten Ausführungsbeispiel nur durch die die Axialverschiebung seines Verriegelungsteils 113 steuernden Elemente. Daher ist im folgenden nur deren Ausbildung beschrieben. Wegen weiterer Einzelheiten wird auf die Ausführungen zu dem ersten Ausführungsbeispiel Bezug genommen.

Wie die Fig. 8 und 9 zeigen, ist der Steuerkörper 109 auf der dem Verriegelungsteil 113 zugekehrten Stirnfläche mit einer Kurvenbahn versehen, die in einer Radialebene liegende plane Abschnitte 120 und 120' und dazwischen je zwei vertiefte Abschnitte 120" aufweist, wobei die an einen der planen Abschnitten 120 oder 120' anschließende Flanke der vertieften Abschnitte 120" eine geringere Neigung hat als die andere Flanke. Eine spiegelbildlich gleich ausgebildete Kurvenbahn ist an der dem Steuerkörper 109 zugekehrten Stirnfläche des Verriegelungsteils 113 vorgesehen. Beide Kurvenbahnen sind aufeinander ausgerichtet.

Statt der Rollen 15 des ersten Ausführungsbeispiels sind zylindrische Wälzkörper 115 vorgesehen, an deren äußere Kontur das Querschnittsprofil der vertieften Abschnitte 120" weitgehend angepaßt ist. Jeder der zylindrischen Wälzkörper 115 ist in einer rechteckförmigen Ausnehmung eines scheibenförmigen Käfigs 132 spielfrei angeordnet. Der Käfig 132 liegt, wie die Fig. 8 und 9 zeigen, zwischen dem Steuerkörper 109 und dem Verriegelungsteil 113 im Abstand von den planen Abschnitten 120 und 120' der beiden Kurvenbahnen.

**Patentansprüche**

1.	Werkzeugrevolver mit
a) einem Gehäuse (2),
b) einem relativ zum Gehäuse (2) mittels eines Motors (6) und einer Antriebswelle (4) drehbaren Revolverkopf (1),
c) zwei koaxial zur Drehachse des Revolverkopfes (1) angeordneten Zahnkränzen (1', 14'), von denen der eine drehfest mit dem Revolverkopf (1) und der andere drehfest mit dem Gehäuse (2) verbunden ist,
d) einem relativ zum Revolverkopf (1) axial verschiebbaren und sich zusammen mit diesem drehenden Verriegelungsteil (13; 113) mit einer auf die beiden Zahnkränze (1', 14') ausgerichteten und in seiner Verriegelungsstellung mit diesen in Eingriff stehenden Verzahnung (13'),
e) einem konzentrisch zur Drehachse der Antriebswelle (4) des Revolverkopfes (1) neben der den Zahnkränzen (1', 14') abgewandten Stirnseite des Verriegelungsteils (13) angeordneten und um diese Drehachse mittels des Motors (6) drehbaren Steuerkörpers (9; 109), mittels dessen durch die Drehbewegung relativ zum Verriegelungsteil (13) letzteres in seine Verriegelungsstellung bewegbar ist, und
f) einem mittels einer Antriebsvorrichtung (30) verschiebbaren Indexierbolzen (29) für eine der Verriegelung des Revolverkopfes (1) mittels des Verriegelungsteils (13; 113) vorausgehenden Ausrichtung am Ende jeder vom Revolverkopf (1) bei einer Einstellung in eine andere Winkellage auszuführenden Drehbewegung,
dadurch gekennzeichnet, daß
g) der Revolverkopf (1) drehfest mit der Antriebswelle (4) verbunden ist,

h) die Antriebswelle (4) über eine Drehmomente übertragende elastische Kupplungseinrichtung (11, 21, 22) mit dem relativ zur Antriebswelle (4) drehbaren Steuerkörper (9; 109) gekuppelt ist und

i) für den Drehantrieb des Verriegelungsteils (13; 113) durch den Revolverkopf (1) eine letzteren mit dem Verriegelungsteil (13; 113) kuppelnde Mitnahmevorrichtung (17, 18) vorgesehen ist.

2. Werkzeugrevolver nach Anspruch 1, dadurch gekennzeichnet, daß die elastische Kupplungseinrichtung (11, 21, 22) einen drehfest mit der Antriebswelle (4) verbundenen ersten Teil (11) und einen mit diesem über elastische Zwischenglieder (22) in Drehverbindung stehenden zweiten Teil (21) aufweist.

3. Werkzeugrevolver nach Anspruch 2, dadurch gekennzeichnet, daß die beiden Teile der elastischen Kupplungseinrichtung (11, 21, 22) konzentrisch ineinander angeordnete Ringe (11, 21) sind, die mit ineinander greifenden Zähnen versehen sind, zwischen denen die elastischen Zwischenglieder (22) angeordnet sind.

4. Werkzeugrevolver nach einem der Ansprüche 1 bis 3, dadurch gekennzeichnet, daß der Steuerkörper (9; 109) mit der elastischen Kupplungseinrichtung (11, 21, 22) über eine formschlüssige, jedoch einen toten Gang für eine Verdrehung um einen festgelegten Winkel in beiden Drehrichtungen aufweisende erste Mitnehmereinrichtung (23, 24) und/oder über eine zweite, kraftschlüssige Mitnehmereinrichtung (25, 26, 27) gekuppelt ist, wobei letztere wenigstens einen federbelasteten Zentrierbolzen (25) im einen der beiden miteinander zu kuppelnden Bauteile aufweist, der in definierter Drehstellung der Bauteile in kraftschlüssigem Eingriff mit wenigstens einer Vertiefung (26) des anderen Teiles steht.

5. Werkzeugrevolver nach Anspruch 4, dadurch gekennzeichnet, daß die Vertiefung (26) zumindest auf einem Teil ihrer Länge einen sich gegen das andere Bauteil hin erweiternden Innenkonus mit einem außerhalb der Selbsthemmung liegenden Konuswinkel und der in sie eingreifende Endabschnitt des Zentrierbolzens (25) einen korrespondierenden Außenkonus aufweisen.

6. Werkzeugrevolver nach Anspruch 4 oder 5, gekennzeichnet durch je eine Vertiefung (27) mit außerhalb des Selbsthemmungsbereichs liegendem Innenkonus für den Eingriff des Zentrierbolzens (25) in den beiden der Freigabestellung des Verriegelungsteils (13; 113) entsprechenden Stellungen.

7. Werkzeugrevolver nach einem der Ansprüche 2 bis 6, dadurch gekennzeichnet, daß der zweite Teil (21) der elastischen Kupplungseinrichtung (11, 21, 22) mit den für den Eingriff des Indexierbolzens (29) erforderlichen Vertiefungen (28) versehen ist.

8. Werkzeugrevolver nach Anspruch 7, dadurch gekennzeichnet, daß das Gehäuse (2) an dem dem Revolverkopf (1) abgewandten Ende mittels eines Deckels (3) abgeschlossen ist, an den sich auf der dem Revolverkopf (1) abgewandten Seite eine Haube (5) anschließt, in welcher ein als Antriebsvorrichtung für den Indexierbolzen (29) dienender Elektromagnet (30) angeordnet ist, und daß die Kupplungseinrichtung (11, 21, 22) neben dem Deckel (3) angeordnet ist.

9. Werkzeugrevolver nach Anspruch 8, dadurch gekennzeichnet, daß im Inneren des durch die Haube (5) und den Deckel (3) dicht verschlossenen Raumes außer dem Elektromagnet (30) ein Drehstellungsgeber (31) für den Revolverkopf (1), zumindest teilweise der Motor (6) sowie gegebenenfalls weitere elektrische Komponenten angeordnet sind.

10. Werkzeugrevolver nach einem der Ansprüche 1 bis 9, dadurch gekennzeichnet, daß die den Verriegelungsteil (13; 113) mit dem Revolverkopf (1) kuppelnde Mitnahmevorrichtung (17, 18) wenigstens einen federbelasteten Mitnahmebolzen (17) im einen Bauteil und je eine Vertiefung (18) für jeden Mitnahmebolzen (17) im anderen Bauteil aufweist.

11. Werkzeugrevolver nach Anspruch 10, dadurch gekennzeichnet, daß jede Vertiefung (18) zumindest auf einem Teil ihrer Länge einen sich nach außen erweiternden Innenkonus mit außerhalb des Selbsthemmungsbereiches liegendem Konuswinkel bildet und daß der in die Vertiefung (18) eingreifende Endabschnitt des Mitnahmebolzens (17) mit einem korrespondierenden Außenkonus versehen ist.

12. Werkzeugrevolver nach einem der Ansprüche 1 bis 11, dadurch gekennzeichnet, daß der Steuerkörper (9; 109) auf seiner dem Verriegelungsteil (13; 113) zugekehrten Stirnseite eine Kurvenbahn (20, 20', 20''; 120, 120', 120'') aufweist, an der Rollkörper (15; 115) anliegen, die andererseits am Verriegelungsteil (13; 113) abgestützt sind.

13. Werkzeugrevolver nach Anspruch 12, dadurch gekennzeichnet, daß die Rollkörper als Ringrollen (15) ausgebildet sind, die auf radial verlaufenden Zapfen (16) des Verriegelungskörpers (13) drehbar gelagert sind.

14. Werkzeugrevolver nach Anspruch 12, dadurch gekennzeichnet, daß die Rollkörper als Wälzkörper (115) ausgebildet sind, die sich in einem Käfig (132) befinden, der frei drehbar zwischen dem Steuerkörper (109) und dem Verriegelungsteil (113) angeordnet ist.

15. Werkzeugrevolver nach Anspruch 14, dadurch gekennzeichnet, daß der Verriegelungsteil (113) auf seiner dem Steuerkörper (109) zugewandten Seite eine auf dessen Kurvenbahn (120, 120', 120'') ausgerichtete und zu diesem symmetrische Kurvenbahn (120, 120', 120'') aufweist.

16. Werkzeugrevolver nach einem der Ansprüche 12 bis 15, dadurch gekennzeichnet, daß die Kurvenbahn eine Form hat, die eine Verschiebung des Verriegelungsteils (13; 113) in seine Verriegelungsstellung durch eine Fortsetzung der Drehbewegung des Steuerkörpers (9; 109) relativ zum Verriegelungsteil (13; 113) in Richtung der vorausgegangenen Drehbewegung gestaltet.

17. Werkzeugrevolver nach einem der Ansprüche 1 bis 15, dadurch gekennzeichnet, daß auf einer der vom Motor (6) angetriebenen Wellen (4, 8), vorzugsweise der bei einer Drehung des Revolverkopfes (1) um einen bestimmten Winkel den größten Drehwinkel ausführenden Welle (8), ein durch Reibschluß von dieser Welle (8) mitnehmbarer Schaltnocken (33, 33') für einen Näherungsschalter (36) angeordnet ist, dessen Drehwinkel aus der den Näherungsschalter (36) aktivierenden Winkelstellung heraus in eine den Näherungsohalter (36) nicht aktivierende Winkelstellung in beiden Drehrichtungen durch einen Anschlag (37) auf weniger als 180° begrenzt ist.

18. Werkzeugrevolver nach einem der Ansprüche 1 bis 17, dadurch gekennzeichnet, daß zwischen der elastischen Kupplungseinrichtung (11, 21, 22) und dem Motor (6) eine zweite, vorzugsweise gleich ausgebildete elastische Kupplungseinrichtung (11', 21', 22') angeordnet ist.

19. Werkzeugrevolver nach Anspruch 18, dadurch gekennzeichnet, daß die zweite elastische Kupplungseinrichtung (11', 21', 22') auf einer Zwischenwelle (8) angeordnet ist und einen doch fest mit dieser Zwischenwelle (8) verbundenes Kupplungsteil (11') sowie ein dieses konzentrisch umgebendes Kupplungsteil (21') aufweist, der mit einer Außenverzahnung versehen ist, die mit einem Ritzel an der Motorwelle (7) kämmt.

20. Werkzeugrevolver nach einem der Ansprüche 1 bis 19, dadurch gekennzeichnet, daß die axiale Verschiebbarkeit des Verriegelungsteils (13; 113) und des Steuerkörpers (9; 109) aus der Verriegelungsstellung heraus weg vom Revolverkopf (1) entgegen der Kraft der sie belastenden Druckfeder (10) größer ist als die Tiefe des Eingriffs der Verzahnung (13') des Verriegelungsteils (13; 113) in den mit dem Gehäuse (2) verbundenen Zahnkranz (14').

**Claims**

1. Tool turret with
    a) a housing (2),
    b) a turret head (1) able to rotate relative to the housing (2) by means of a motor (6) and a drive shaft (4),
    c) two gear rings (1', 14') arranged coaxially with respect to the axis of rotation of the turret head (1), whereof the one is connected to the turret head (1) without relative rotation and the other is connected to the housing (2) without relative rotation,
    d) a locking part (13; 113) able to move axially relative to the turret head (1) and rotating together with the latter, with toothing (13') aligned with the two gear rings (1', 14') and meshing with the latter in its locking position,
    e) a control member (9; 109) arranged concentrically with respect to the axis of rotation of the drive shaft (4) of the turret head (1) beside the end face of the locking part (13) remote from the gear rings (1', 14') and able to rotate about this axis of rotation by means of the motor (6), by means of which, due to the rotary movement relative to the locking part (13), the latter is able to be moved into its locking position, and
    f) an indexing bolt (29) displaceable by means of a driving device (30), for an alignment preceding the locking of the turret head (1) by means of the locking part (13; 113), at the end of each rotary movement to be carried out by the turret head (1) upon an adjustment into another angular position,

characterized in that

g) the turret head (1) is connected to the drive shaft (4) without relative rotation,

h) the drive shaft (4) is connected by way of a flexible coupling device (11, 21, 22) transmitting moments of rotation, to the control member (9; 109) able to rotate relative to the drive shaft (4) and

i) for the rotary drive of the locking part (13; 113) by the turret head (1), an entrainment device (17, 18) is provided connecting the turret head to the locking part (13; 113).

2. Tool turret according to Claim 1, characterized in that the flexible coupling device (11, 21, 22) comprises a first part (11) connected to the drive shaft (4) without relative rotation and a second part (21) in rotary connection with the latter by way of flexible intermediate members (22).

3. Tool turret according to Claim 2, characterized in that the two parts of the flexible coupling device (11, 21, 22) are rings (11, 21) arranged concentrically one in the other, which are provided with teeth meshing one in the other, between which the flexible intermediate members (22) are disposed.

4. Tool turret according to one of Claims 1 to 3, characterized in that the control member (9; 109) is connected to the flexible coupling device (11, 21, 22) by way of a form-locking, first entrainment device (23, 24) having a dead travel for a rotation by a fixed angle in both directions of rotation and/or is connected by way of a second, force-locking entrainment device (25, 26, 27), the latter comprising at least one spring-loaded centring bolt (25) in one of the two components to be connected to each other, which in a definite rotary position of the components is in frictional engagement with at least one recess (26) in the other part.

5. Tool turret according to Claim 4, characterized in that at least over part of its length, the recess (26) comprises an inner cone widening out towards the other component, with a cone angle lying outside the self-locking range and the end section of the centring bolt (25) engaging therein comprises a corresponding outer cone.

6. Tool turret according to Claim 4 or 5, characterized by respectively one recess (27) with an inner cone lying outside the self-locking range for the engagement of the centring bolt (25) in the two positions corresponding to the release position of the locking part (13; 113).

7. Tool turret according to one of Claims 2 to 6, characterized in that the secondn part (21) of the flexible coupling device (11, 21, 22) is provided with the recesses (28) required for the engagement of the indexing bolt (29).

8. Tool turret according to Claim 7, characterized in that at the end remote from the turret head (1), the housing (2) is closed by means of a cover (3), adjoining which, on the side remote from the turret head (1), is a hood (5), in which an electromagnet (30) serving as the driving device for the indexing bolt (29) is located and in that the coupling device (11, 21, 22) is located beside the cover (3).

9. Tool turret according to Claim 8, characterized in that located inside the chamber hermetically sealed by the hood (5) and the cover (3), apart from the electromagnet (30) are a rotary position indicator (31) for the turret head (1), at least partly the motor (6) and if necessary further electrical components.

10. Tool turret according to one of Claims 1 to 9, characterized in that the entrainment device (17, 18) connecting the locking part (13; 113) to the turret head (1) comprises at least one spring-loaded entrainment bolt (17) in one component and respectively a recess (18) for each entrainment bolt (17) in the other component.

11. Tool turret according to Claim 10, characterized in that on at least one part of its length each recess (18) forms an inner cone widening out towards the outside, with a cone angle lying outside the self-locking range and in that the end section of the entrainment bolt (17) engaging in the recess (18) is provided with a corresponding outer cone.

12. Tool turret according to one of Claims 1 to 11, characterized in that on its front end facing the locking part (13; 113), the control member (9; 109) comprises a cam path (20, 20', 20"; 120, 120', 120"), against which rolling members (15; 115) bear, which at the other side are supported on the locking part (13; 113).

13. Tool turret according to Claim 12, characterized in that the rolling members are constructed as annular rollers (15), which are mounted to rotate on radially extending journals (16) of the locking member (13).

14. Tool turret according to Claim 12, characterized in that the rolling members are constructed as roll bodies (115), which are located in a cage (132), which is arranged to rotate freely between the control member (109) and the locking part (113).

15. Tool turret according to Claim 14, characterized in that on its side facing the control member (109), the locking part (113) comprises a cam path (120, 120', 120") aligned with its cam path (120, 120', 120") and symmetrical thereto.

16. Tool turret according to one of Claims 12 to 15, characterized in that the cam path has a shape which allows a displacement of the locking part (13; 113) into its locking position by a continuation of the rotary movement of the control member (9; 109) relative to the locking part (13; 113) in the direction of the preceding rotary movement.

17. Tool turret according to one of Claims 1 to 15, characterized in that located on one of the shafts (4, 8) driven by the motor (6), preferably the shaft (8) covering the largest rotary angle upon a rotation of the turret head (1) by a certain angle, is a trip cam (33, 33') able to be entrained by frictional resistance by this shaft (8), for a proximity switch (36), whereof the angle of rotation from the angular position activating the proximity switch (36) into an angle position not activating the proximity switch (36) is restricted to less than 180° in both directions of rotation by a stop (37).

18. Tool turret according to one of Claims 1 to 17, characterized in that located between the flexible coupling device (11, 21, 22) and the motor (6) is a second flexible coupling device (11', 21', 22') preferably having an identical construction.

19. Tool turret according to Claim 18, characterized in that the second flexible coupling device (11', 21', 22') is located on an intermediate shaft (8) and comprises a coupling part (11') securely connected to this intermediate shaft (8) as well as a coupling part (21') surrounding the latter concentrically, which is provided with external toothing, which meshes with a pinion on the motor shaft (7).

20. Tool turret according to one of Claims 1 to 19, characterized in that the axial displaceability of the locking part (13; 113) and of the control member (9; 109) from the locking position away from the turret head (1) against the force of the compression spring (10) biasing it, is greater than the depth of the engagement of the toothing (13') of the locking part (13; 113) in the gear ring (14') connected to the housing (2).

**Revendications**

1. Tourelle pour tour révolver qui comprend :
   a) une enveloppe (2);
   b) une tourelle ou une tête (1) pouvant être entraînée en rotation au moyen d'un moteur (6) et d'un arbre de transmission (4);
   c) deux couronnes dentées (1', 14') montées coaxialement à l'axe de rotation de la tourelle (1), dont l'une est solidaire en rotation de la tourelle (1), tandis que l'autre est solidaire en rotation de l'enveloppe (2);
   d) un élément de verrouillage (13; 113), déplaçable axialement par rapport à la tourelle (1), et qui est solidaire en rotation de cette dernière et une denture (13') alignée et en prise avec elles dans sa position de verrouillage,
   e) un organe de commande (9; 109) monté concentriquement à l'axe de rotation de l'arbre de transmission (4) de la tourelle (1), près de la face frontale de l'élément de verrouillage (13) détournée des couronnes dentées (1'; 14'), et qui peut être tourné autour dudit axe de rotation au moyen d'un moteur (6), organe de commande (9; 109) au moyen duquel, grâce au mouvement de rotation par rapport à l'élément de verrouillage (13), ce dernier peut être déplacé en position de verrouillage, et
   f) une cheville d'indexage (29), déplaçable au moyen d'un dispositif d'actionnement (30), aux fins de verrouillage de la tourelle (1), au moyen de l'élément de verrouillage (13; 113) de façon à verrouiller préalablement la tourelle (1) à la fin de chacune des positions angulaires différentes qu'il occupe au cours de son mouvement de rotation, caractérisée en ce que :
   g) la tourelle (1) est solidaire en rotation de l'arbre de transmission (4);
   h) l'arbre de transmission (4) est accouplé, par l'intermédiaire d'un dispositif de couplage élastique (11, 21, 22) transmettant les couples de rotation, à l'élément de commande (9; 109) pouvant tourner par rapport à l'arbre de transmission (4); et
   i) et, en ce que, pour réaliser la transmission du mouvement de rotation de l'élément de verrouillage (13; 113) par la tourelle (1), un dispositif d'entraînement ou de transmission (17, 18) assurant le couplage de ce dernier avec l'élément de verrouillage (13; 113).

2. Tourelle de tour révolver selon la revendication 1, caractérisée en ce que le dispositif de couplage ou d'accouplement élastique (11, 21, 22) comprend une première partie (11) solidaire en rotation de l'arbre de transmission (4) et une seconde partie (21) rendue solidaire en rotation de ce dernier par des éléments intermédiaires élastiques (22).

3. Tourelle pour tour révolver selon la revendication 2, caractérisée en ce que les deux parties du dispositif d'accouplement élastique (11, 21, 22) sont des bagues emboîtées concentriques (11, 21) qui présentent des dentures engrénantes, entre lesquelles sont interposés des éléments intermédiaires élastiques (22).

4. Tourelle de tour révolver selon l'une quelconque des revendications 1 à 3, caractérisée en ce que l'élément de commande (9; 109) accouplé au dispositif de couplage élastique (11, 21, 22) par un premier dispositif d'entraînement ou de transmission (23, 24) opérant par complémentarité de formes, qui cependant présente un rapport zéro ou "mort" permettant un mouvement de rotation dans les deux directions suivant un angle déterminé et/ou est couplé par un second dispositif d'entraînement ou de transmission positif (25, 26, 27), la disposition étant telle que ce dernier comporte, au moins, une cheville de centrage à ressort (25) faisant partie de l'un des deux composants à accoupler, cheville qui, dans certaines positions angulaires bien définies des composants, assure une liaison cinématique avec, au moins, un renfoncement (26) de l'autre composant.

5. Tourelle de tour révolver selon la revendication 4, caractérisée en ce que le renfoncement (26) présente, au moins, sur une partie de sa longueur, un évidement conique s'évasant en direction de l'autre composant, présentant un angle de conicité non auto-grippant, tandis qu'une partie d'extrémité de la cheville de centrage (25) présente un cône extérieur correspondant.

6. Tourelle de tour révolver selon la revendication 4 ou 5, caractérisée en ce qu'elle comporte respectivement un renfoncement (27) qui présente un cône intérieur en-dehors du domaine d'autro-grippage, aux fins d'engagement de la cheville de centrage (25) dans les deux positions correspondant à la position de libération de l'élément de verrouillage (13; 113).

7. Tourelle de tour révolver selon l'une quelconque des revendications 2 à 6, caractérisée en ce que la seconde partie (21) du dispositif d'accouplement élastique (11, 21, 22) possède les renfoncements (28) nécessaires pour l'engagement de la cheville d'indexage (29).

8. Tourelle de tour révolver selon la revendication 7, caractérisée en ce que le côté de l'enveloppe (2) orienté à l'opposé de la tourelle ou de la tête (1) est fermé par un couvercle (3) auquel se raccorde du côté opposé à la tourelle (1), un capot (5) dans lequel est logé un électroaimant (30) constituant le dispositif d'actionnement de la cheville d'indexage (29), et en ce que le dispositif d'accouplement (11, 21, 22) est placé à côté du couvercle (3).

9. Tourelle de tour révolver selon la revendication 8, caractérisée en ce que, à l'intérieur de l'espace délimité par le capot (5) et le couvercle (3) sont logés, outre l'électro-aimant (30), un générateur de position angulaire (31) pour la tourelle ou la tête (1), et au moins, une partie du moteur (6), ainsi que d'autres composants électriques, le cas échéant.

10. Tourelle de tour révolver selon l'une quelconque des revendications 1 à 9, caractérisée en ce que le dispositif d'entraînement de la tourelle (1) comporte, au moins, une cheville d'entraînenent à ressort (17) dans l'un des composants, et respectivement un renfoncement ou une cavité (18) pour chaque cheville d'entraînement (17) dans l'autre.

11. Tourelle de tour révolver selon la revendication 10, caractérisée en ce que chaque renfoncement ou chaque cavité (18) présente, au moins, sur une partie de sa longueur, un cône intérieur s'évasant vers l'extérieur, situé en-dehors du domaine d'auto-grippage, et en ce que la partie d'extrémité de la cheville d'entraînement ou de couplage (17) s'engageant dans le renfoncement (18) possède un cône extérieur correspondant.

12. Tourelle de tour révolver selon l'une quelconque des revendications 1 à 11, caractérisée en ce que la face frontale tournée vers l'élément de verrouillage (13; 113) de l'élément de commande (19; 119) présente une piste (20, 20', 20"; 120, 120', 120") sur laquelle s'appliquent des éléments de roulement (15; 115) qui, d'autre part, prennent appui sur l'élément de verrouillage (13; 113).

**13.** Tourelle de tour révolver selon la revendication 12, caractérisée en ce que les éléments de roulement présentent la forme de roulements à galets (15) qui sont montés à rotation sur des tourillons (16) orientés radialement de l'élément de verrouillage (13).

**14.** Tourelle de tour révolver selon la revendications 12, caractérisée en ce que les éléments de roulement sont des galets (115) logés dans une cage (321) qui peut tourner librement entre l'élément de commande (109) et l'élément de verrouillage (113).

**15.** Tourelle de tour révolver selon la revendication 14, caractérisée en ce que l'élément de verrouillage (113) comporte, sur le côté tourné vers l'élément de commande (109) une piste (120, 120', 120") orientée vers et symétrique à celle-ci.

**16.** Tourelle de tour révolver selon l'une quelconque des revendications 12 à 15, caractérisée en ce que la piste a une forme qui assure le déplacement de l'élément de verrouillage (13; 113) vers et à sa position de verrouillage en prolongeant le mouvement de l'élément de commande (9; 109) par rapport à l'élément de verrouillage (13; 113) dans la direction du mouvement de rotation précédent.

**17.** Tourelle de tour révolver selon l'une quelconque des revendications 1 à 15, caractérisée en ce que sur l'un des arbres entraînés par le moteur (6), de préférence, celui (8) des arbres qui effectue le plus grand mouvement angulaire de rotation, entraîne une came de commande (33, 33') d'un commutateur de proximité (36) d'une position d'activation de ce dernier à une position de non-activation dudit commutateur de proximité (36) dans les deux directions de rotation entre des bornes limitées à moins de 180° par une butée (37).

**18.** Tourelle de tour révolver selon l'une quelconque des revendications 1 à 17, caractérisée en ce que, entre le dispositif d'accouplement élastique (11, 21, 22) et le moteur (6) est interposé un second dispositif d'accouplement élastique identique (11', 21', 22').

**19.** Tourelle de tour révolver selon la revendication 18, caractérisée en ce qu'un second dispositif d'accouplement élastique (11', 21', 22') est monté sur un arbre intermédiaire (8) et comporte un élément d'accouplement (11') fixé sur l'arbre intermédiaire (8), ainsi qu'un élément d'accouplement entourant celui-ci concentriquement (21'), qui comporte une denture extérieure qui engrène avec un pignon de l'arbre de moteur (7).

**20.** Tourelle de tour révolver selon l'une quelconque des revendications 1 à 19, caractérisée en ce que la résistance de déplacement dans le sens axial de l'élément de verrouillage (13; 113) et de l'élément de commande (9; 109), hors de la position de verrouillage, à l'opposé de la tourelle (1), à l'encontre de la force du ressort de compression (10) qui le charge, est supérieure à la profondeur d'engagement de la denture (13') de l'élément de verrouillage (13; 113) dans la couronne dentée (14') reliée à l'enveloppe (2).

Fig.1

EP 0 343 329 B1

Fig.2

Fig.3

EP 0 343 329 B1

## Fig.4

## Fig.5

Fig.7

Fig.6

# Fig.8

109 120'' 120 132
120'

132 115 120'' 115 120' 120 120' 120''
113

# Fig.9

120'' 109 120 132 120' 120''

120' 132 115 120'' 120 115 120'

EP 0 343 329 B1